# EUROPEAN PATENT SPECIFICATION

(11) **EP 1 986 356 B1**
(45) Date of publication and mention of the grant of the patent: **11.01.2012**
(21) Application number: 08007597.1
(22) Date of filing: 18.04.2008
(51) Int. Cl.: G06K 7/00

(54) **Radio tag reader**
Funketikettenleser
Lecteur d'étiquettes radio

(30) Priority: 26.04.2007 JP 2007117429; 26.04.2007 JP 2007117430
(43) Date of publication of application: 29.10.2008
(73) Proprietor: Toshiba TEC Kabushiki Kaisha, Tokyo 141-8664 (JP)
(72) Inventor: Kato, Masakazu Toshiba TEC Kabushiki Kaisha IP Division, Tokyo 141-8664 (JP)
(74) Representative: Kramer - Barske - Schmidtchen

(56) References cited:
- EP-A- 1 734 658
- US-A1- 2006 252 398

## Description

The present invention relates to a radio tag reader which performs communication with a radio tag.

As regards a communication system of a radio tag such as a radio-frequency identification (RFID) tag and a radio tag reader, there is a backscatter system. In the backscatter system, the radio tag reader transmits an unmodulated radio wave to the radio tag, and the radio tag receives the radio wave to covert it into a direct current for an operation. Further, the radio tag varies impedance of an antenna of the radio tag, and then, reflects and absorbs the received radio wave. With receiving the reflected wave from the radio tag, the radio tag reader performs data communication with the radio tag. In other words, the radio tag reader receives the radio wave from the radio tag while transmitting a radio wave for an operation power supply. This operation is special to the communication between the radio tag and the radio tag reader.

Such a radio reader tag mounts a carrier sense function for avoiding interference with other radio tag reader. The carrier sense function also referred to as a listen before talk (LBT) means a function of scanning a reception signal with the same frequency as a frequency (channel) to be transmitted for a fixed time period before the radio tag reader transmits the radio wave and of checking whether or not other radio tag reader performs communication by using the radio wave of the same frequency, and if it is confirmed that other radio tag reader does not perform communication by the use of the radio wave of the same frequency, a self station of the radio tag reader may start communication. An execution time period and sensitivity, etc. are provided by the Japan Wireless Telegraphy Act, for example, in Japan, it is decided that a carrier sense sensitivity of -74 dBm is required for a radio tag reader capable of outputting up to 1 W.

As regards a reception system of the radio tag reader, a direct conversion system is frequently used. The direct conversion system has been well known as a system in which a frequency of a local oscillator uses almost the same frequency as a reception frequency, and generates a baseband signal without using an intermediate frequency. The radio tag reader in the direct conversion system also executes the carrier sense in a similar manner (e.g., Jpn. Pat. Appln. KOKAI Publication No. 2007-28583 and EP1734658).

Meanwhile, as regards the same kind of the radio tag, there are non-contact IC cards having a plurality of different modulation-demodulation systems, and as regards a reader communicating with the non-contact IC cards, a non-contact IC card reader/writer, which has a plurality of filters which are different in passbands to be used by selectively switching, has been well known (e.g., Jpn. Pat. Appln. KOKAI Publication No. 2003-92561).

Usually, the carrier sense sensitivity of the radio tag reader is higher than the reception sensitivity in communication with the radio tag. Therefore, in general, the radio tag reader is provided with a high-frequency amplifier for amplifying the reception signal, and makes a gain in executing carrier sense high, or does not use the high-frequency amplifier in usual reception, uses the high-frequency amplifier only in execution of the carrier sense, and then, heightens the gain in execution of the carrier sense.

However, in this case, there is a specific characteristic that, when a signal with a high level is received in execution of the carrier sense, the reception signal is apt to be saturated in the baseband. For instance, even if other radio tag reader uses a transmission frequency in a channel differing from that of the self station, when a strong wave transmitted from other radio tag reader is input to the self station, the reception signal is saturated in the baseband section and distorted, thereby, a frequency component corresponding to the communication speed of other station is brought into the carrier sense band of the self station, and as a result, such a problem that the self station unnecessarily performs the carrier sense is produced.

Like the foregoing Jpn. Pat. Appln. KOKAI Publication No. 2003-92561, although disposing the plurality of filters differing in passband and using them by selectively switching is a possible approach, this technique disclosed in the patent document given above only switches the plurality of filters for the non-contact IC cards responding at mutually differing frequencies, results in erroneous carrier sense in the input of the strong wave, and then, becomes impossible to transmit radio waves.

An object of the present invention is to provide a radio tag reader with high reliability and configured to prevent erroneous carrier sense and to accurately transmit even when a strong radio wave is input from other radio tag reader communicating by a frequency in other channel.

According to the invention, there is provided a radio tag reader, comprising: carrier sense means for executing carrier sense which senses a reception signal having the same frequency as a frequency to be transmitted for a fixed time before transmitting the frequency for confirming that another tag reader does not communicates through the frequency; amplification means for amplifying the reception signal so that the reception signal during execution of the carrier sense is larger than that during non-execution of carrier sense; and conversion means for converting the reception signal which has passed through the amplification means into a baseband signal and for supplying the converted reception signal to the carrier sense means as an object to be sensed, characterized in that the radio tag reader further comprises: first filters for eliminating frequency components corresponding to a communication speed of the radio tag reader among the baseband signals converted by the conversion means, wherein the carrier sense means detects presence or absence of the same frequency components as those of a transmission frequency in the baseband signals which have passed through the first filters before the radio tag reader transmits the transmission frequency and executes carrier sent for allowing the radio tag reader to make transmission if the same frequency components are absent.

The invention can be more fully understood from the following detailed description when taken in conjunction with the accompanying drawings, in which:
FIG. 1 is a block view depicting a configuration of principal units of the first embodiment;
FIG. 2 is a block diagram depicting a main configuration of a signal processing unit in FIG. 1;
FIG. 3 is a view depicting a baseband signal I and its frequency component when a small signal is input from other radio tag reader in the first embodiment;
FIG. 4 is a view depicting a frequency characteristic of a low-pass filter in the first embodiment;
FIG. 5 is a view depicting a baseband signal I and its frequency component when a large signal is input from other radio tag reader in the first embodiment;
FIG. 6 is a view depicting a frequency characteristic of a band-elimination filter in the first embodiment;
FIG. 7 is a view depicting a block diagram depicting configurations of principal units of the second, third and fourth embodiments;
FIG. 8 is a block diagram depicting a main configuration of the signal processing unit in FIG. 7;
FIG. 9 is a block diagram depicting a configuration of a modulation control unit in the second embodiment;
FIG. 10 is a view depicting a waveform of each modulation signal in the second embodiment;
FIG. 11 is a view depicting a waveform of a baseband signal in the second embodiment;
FIG. 12 is a view depicting, as a reference, relationships between frequencies and amplitude values of baseband signals if each modulation signal is one in the second, third and fourth embodiments;
FIG. 13 is a view depicting a relationship between a frequency and an amplitude value of a baseband signal in switching two frequencies in the second embodiment;
FIG. 14 is a block diagram depicting a configuration of a modulation control unit in the third embodiment;
FIG. 15 is a view depicting a relationship between a frequency and an amplitude value of a baseband signal in switching three frequencies in the third embodiment;
FIG. 16 is a block diagram depicting a configuration of a modulation control unit in the fourth embodiment; and
FIG. 17 is a view depicting a relationship between a frequency and an amplitude value of a baseband signal by overlapping of two frequencies in the fourth embodiment.

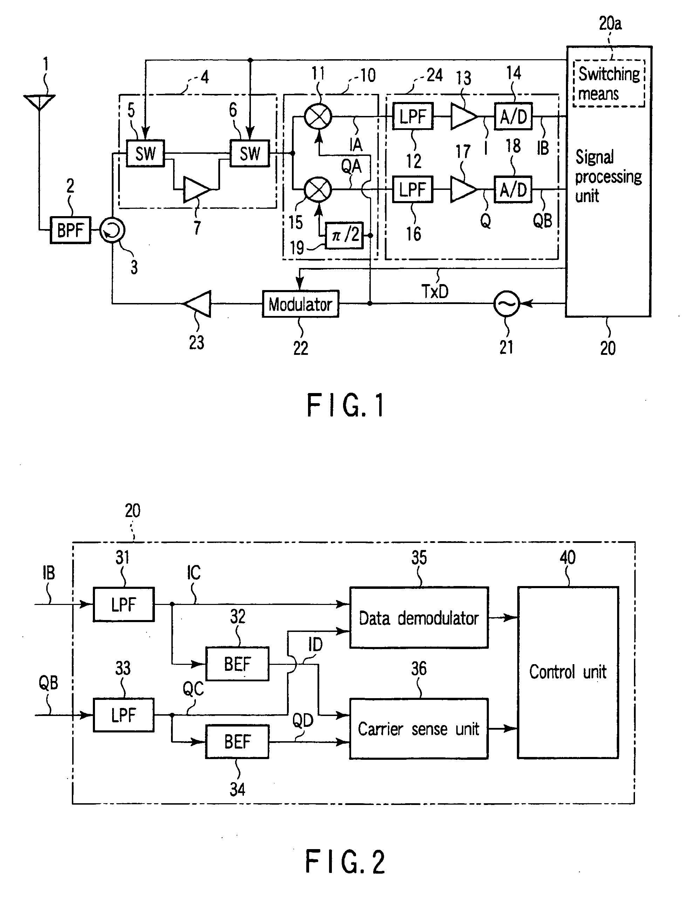

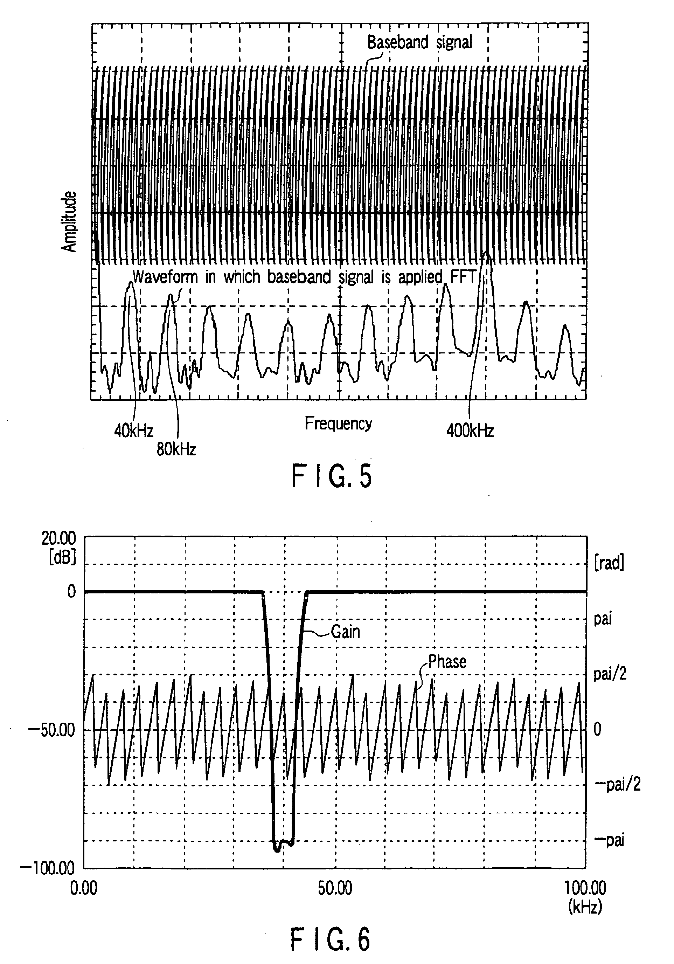

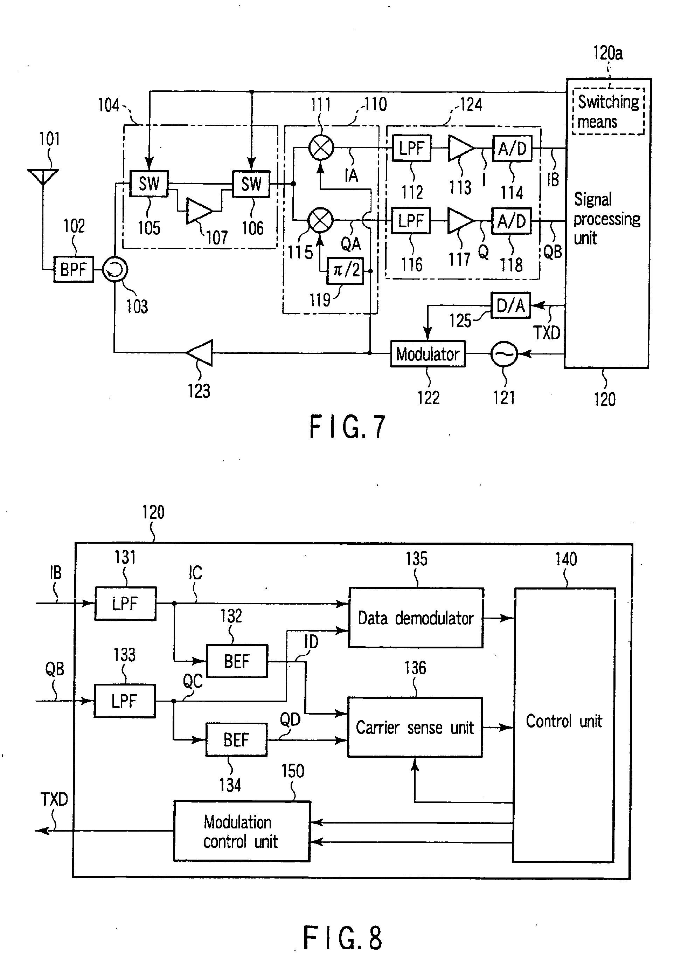

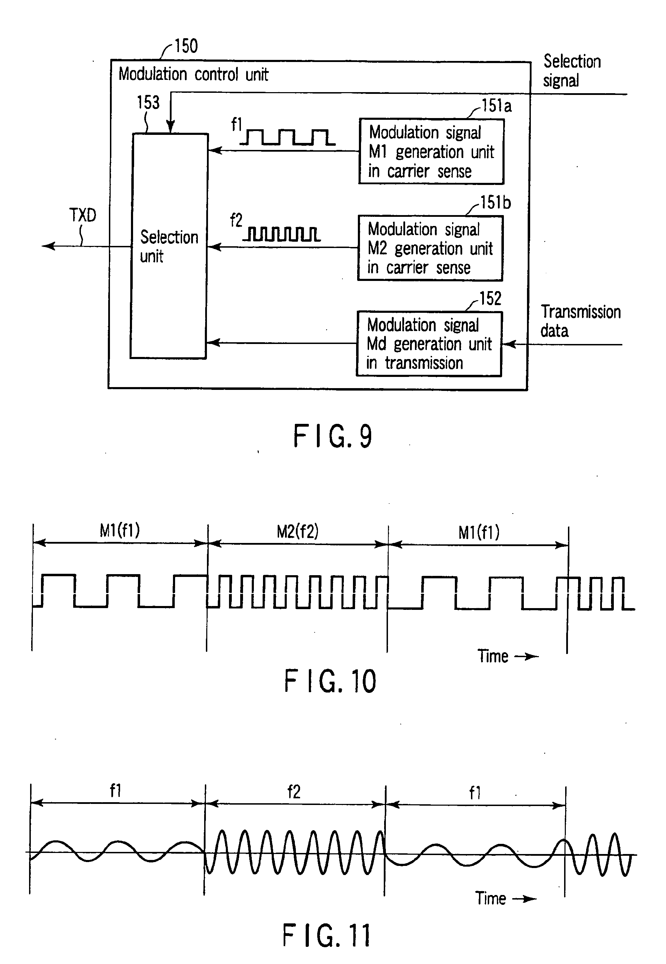

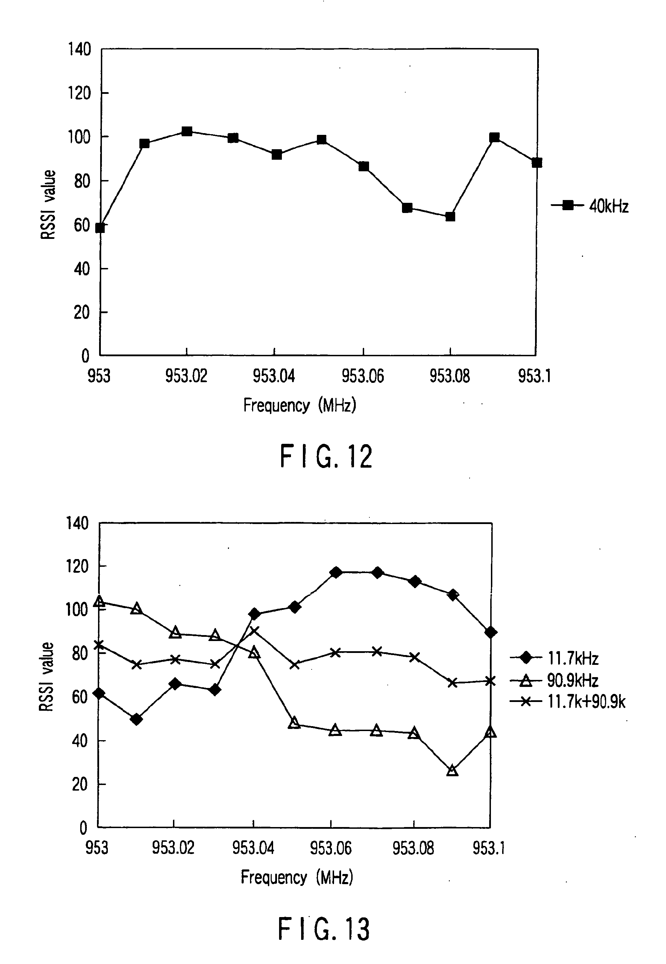

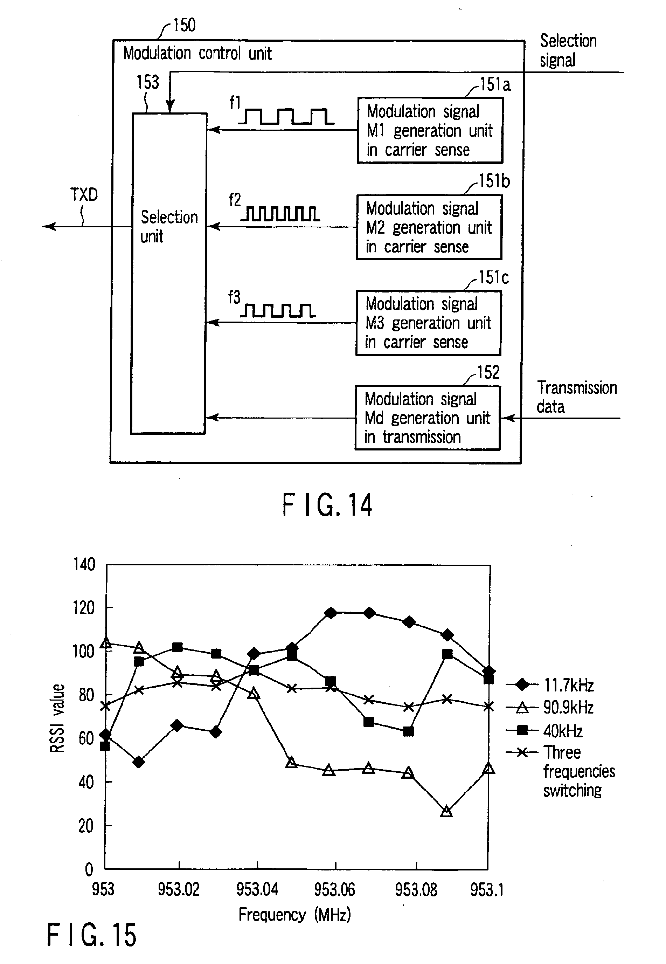

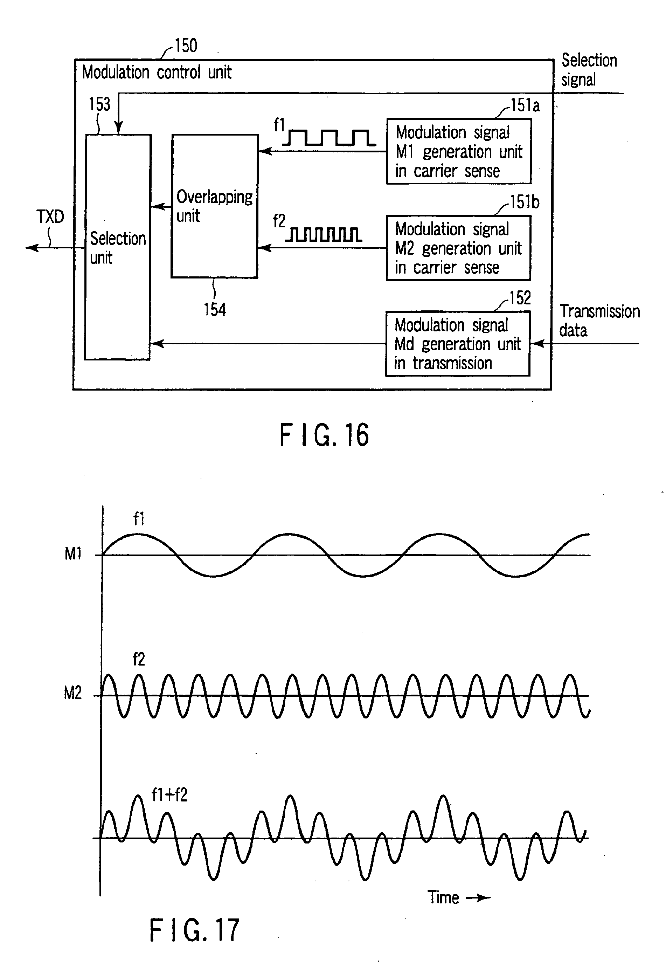

[1] Hereinafter, the first embodiment of the invention will be described with reference to the drawings. FIG. 1 shows principal units of a radio tag reader adopting a direct conversion system as a communication system.
   A circulator (directional coupler) 3 is connected to an antenna 1 for transmission and reception via a bandpass filter (BPF) 2. The BPF 2 passes frequency components in a predetermined band for transmission and reception among reception signals (high-frequency signals) of the antenna 1. The reception signal passed though the BPF 2 is led to an amplification and non-amplification switching circuit (amplification means) 4 by the circulator 3.
   The amplification and non-amplification switching circuit 4 amplifies or does not amplify the reception signal in response to an instruction from a signal processing unit 20, and has switchers (SWs) 5, 6 and a high-frequency amplifier 7. A switching means 20a for controlling the SWs 5, 6 is provided for the signal processing unit 20. The switching means 20a controls the switchers 5, 6 so that the reception signal input in the switching circuit 4 is amplified by the high-frequency amplifier 7 in executing the below mentioned carrier sense, and so that the reception signal is not amplified by the high-frequency amplifier 7 in ordinary reception in which the carrier sense is not executed. That is, the switcher 5 supplies the reception signal from the BPF 2 to either the switcher 6 or the high-frequency amplifier 7 in accordance with the instruction from the switching means 20a. In non-execution of the carrier sense (in ordinary reception), the switcher 5 directly supplies the reception signal to the switcher 6 without through the high-frequency amplifier 7, and in execution of the carrier sense, the switcher 5 supplies the reception signal to the switcher 6 through the high-frequency amplifier 7. The high-frequency amplifier 7 amplifies the reception signal supplied from the switcher 5 to a level necessary for carrier sense sensitivity of the below mentioned carrier sense unit 36. The reception signal amplified by the high-frequency amplifier 7 is supplied to the switcher 6. The switcher 6 selectively outputs either the reception signal from the switcher 5 or the reception signal from the high-frequency amplifier 7 in response to the instruction from the switching means 20a. In non-execution of the carrier sense, the switcher 6 outputs the reception signal from the switcher 5, and in execution of the carrier sense, the switcher 6 outputs the reception signal from the high-frequency amplifier 7.
   The reception signal which has passed through the amplification and non-amplification switching circuit 4 is supplied to a frequency conversion unit (conversion means) 10. The conversion unit 10 converts the reception signal to be supplied from the switching circuit 4 into a baseband signal, and includes mixers 11, 15 and a 90 degrees phase shifter 19. The baseband signal output from the conversion unit 10 is supplied to a baseband unit 24. The baseband unit 24 includes low-pass filters (LPFs) 12, 16, low-frequency amplifiers 13, 17 and analog-to-digital converters 14, 18.
   The mixer 11 mixes the reception signal from the switching circuit 4 and the high-frequency signal (having almost the same frequency as that of the reception signal) to be supplied from the local oscillator 21 given below and generates a baseband signal IA with the same phase component (I component) as that of the local signal. After being passed through the LPF 12 and amplified by the low-frequency amplifier 13, the baseband signal IA is digital-converted by the analog-to-digital converter 14, and supplied to the signal processing unit 20.
   The phase sifter 19 outputs a signal in which the phase of the high-frequency signal to be supplied from the local oscillator 21 mentioned below is varied at 90 degrees.
   The mixer 15 mixes the reception signal from the switching circuit 4 with the high-frequency signal to be supplied from the phase sifter 19, and then, generates a baseband signal QA of a quadrature component (Q component) against a local signal. The baseband signal QA passes through the LPF 16, after being amplified by the low-frequency amplifier 17, and then, the signal QA is digital-converted by the analog-to-digital converter 18 to be supplied to the signal processing unit 20.
   The local oscillator 21 operates in response to the instruction from the signal processing unit 20 and generates a high-frequency signal (e.g., 953 MHz) of almost the same frequency as that of the reception signal from the radio tag. This high-frequency signal is supplied to the mixer 11, the 90 degrees phase shifter 19 and the modulator 22. The modulator 22 modulates the high-frequency signal from the local oscillator 21 on the basis of data TxD in transmission of data, and also outputs the high-frequency signal from the local oscillator 21 without modulation as a power supply for the radio tag. The output signal from the modulator 22 is power-amplified by a power amplifier 23 and led to the side of the BPF 2 through the circulator 3. The antenna 1 transmits the high-frequency signal which has passed through the BPF 2.
   The signal processing unit 20 includes, as shown in FIG. 2, a low-pass filter (LPF: second filter) 31 to which the baseband signal IB to be digitized by the baseband unit 2 is supplied, a band-elimination filter (BEF: first filter) 32 to which the baseband signal IC passed through the LPF 31 is supplied; a low-pass filter (LPF: second filter) 33 to which the baseband signal QB digitized by the baseband unit 24 is supplied; a band-elimination filter (BEF: first filter) to which the baseband signal QC passed through the LPF 33 is supplied; a data demodulator 35 to which the baseband signals IC, QC passed though the LPFs 31, 33 are supplied; a carrier sense unit 36 to which the baseband signals ID, QD passed through the BEFs 32, 34 are supplied; and a control unit 40 to which the data demodulator 35 and the carrier sense unit 36 are connected. The BEFs 32, 34 are exclusive filters in execution of the carrier sense.
   The LPFs 31, 33 pass the frequency components (e.g., 40 kHz) corresponding to a communication speed (e.g., 40 kbps) of the radio tag reader, respectively, among the baseband signals IB, QB generated from the baseband unit 24.
   The BEFs 32, 34 eliminate the frequency components corresponding to the communication speed of the radio tag reader, respectively, among the baseband signals IC, QC which have passed through the LPFs 31, 33.
   The data demodulator 35 demodulates the baseband signals IC, QC which have passed through the LPFs 31, 33 to the control unit 40.
   The carrier sense unit 36 has a function of the aforementioned carrier sense function, detects the presence or absence of the same frequency component as that of the transmission frequency (e.g., 953 MHz) from the baseband signals which have passed through the BEFs 32, 34 before the transmission of the radio wave from the radio tag reader, and executes the carrier sense for permitting the transmission from the radio tag reader if the same frequency component has not been detected. The result from the carrier sense is supplied to the control unit 40.
   The control unit 40 is provided with the following (1) (2) as its principle functions.
   (1) A means for executing each kind of control regarding data transmission and reception by recognizing the demodulated data from the data demodulator 35 in ordinary reception (in non-execution of carrier sense).
   (2) A means for permitting or inhibiting the transmission by the radio tag reader in accordance with the result from the carrier sense by the carrier sense unit 36.
   Next to this, the operations of the control unit 40 will be described.
   The high-frequency signal to be received by the antenna 1 is input to the amplification and non-amplification switching circuit 4 via the BPF 2 and the circulator 3. At this moment, if being in non-execution of the carrier sense (in ordinary reception), the reception signal input to the switching circuit 4 is supplied to the frequency converter 10 without the amplification of the reception signal. In execution of the carrier sense, the reception signal, which is input to the switching circuit 4 so as to obtain necessary carrier sense sensitivity, is amplified by the high-frequency amplifier 7 and is supplied to the frequency converter 10.
   The reception signal input to the converter 10 is converted into the baseband signals IA, QA on the basis of the high-frequency signal from the local oscillator 21. The baseband signals IB, QB digitized by means of the baseband unit 24 are input to the data demodulator 35 via the LPFs 31, 33 and also input to the carrier sense unit 36 via the LPFs 31, 33 and the BEFs 32, 34.
   The carrier sense unit 36 executes the carrier sense before the radio tag reader transmits the radio wave. For instance, in the case of intending to start the transmission through the frequency of the 5th channel (953 MHz) among the frequency bands for the radio tag which have been allocated to Japan, the same frequency component as that of the transmission frequency is detected from the baseband signals ID, QD which have passed through the LPFs 31, 33 and BEFs 32, 34. If the levels of the baseband signals ID, QD are lower than the preset values, it is determined that the same frequency component as that of the transmission frequency is absent. In this case, the transmission is allowed. However, if the levels of the baseband signals ID, QD are not lower than the preset value, it is determined that the same frequency component as that of the transmission frequency is present. In this case, the transmission is inhibited.
   It is assumed that the radio wave of a frequency of the 7th channel (953.4 MHz) separated by 400 kHz from the frequency of the 5th channel (953 MHz) of the radio tag reader has been transmitted from other radio tag reader. For the purpose of simplicity, the following description will describe only the baseband signal of the same phase (I component), and the description about the baseband signal of the quadrature phase (Q component) will be omitted because of the similarity therebetween.

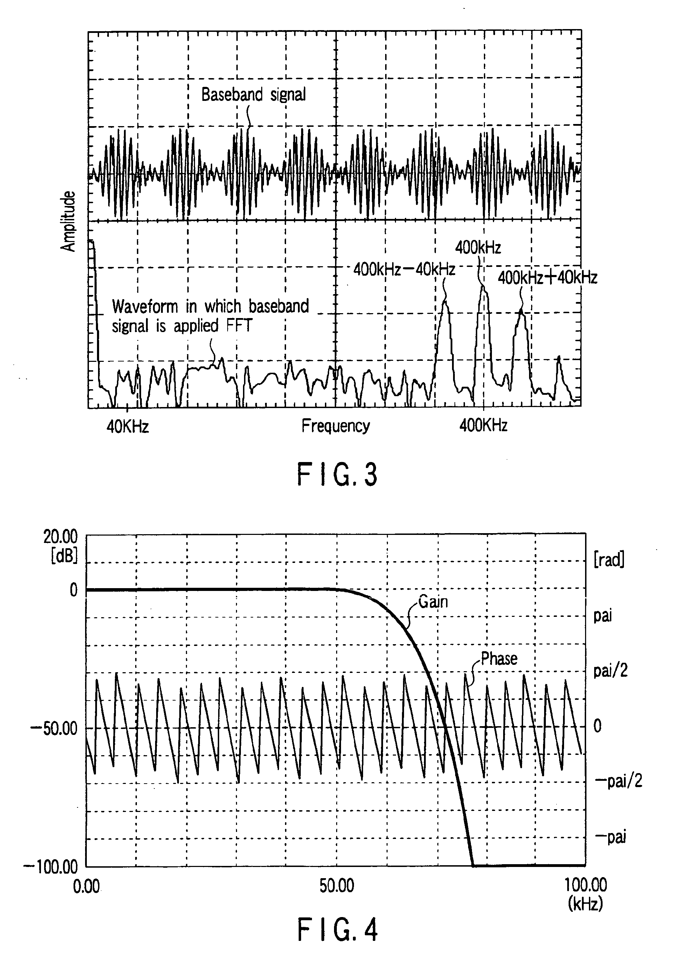

   FIG. 3 shows the case, in which it is assumed that other radio tag reader transmits the radio wave of the frequency of the 7th channel (953.4 MHz), a signal generator generates an AM signal of 40 kHz to input a signal with a low level around -70 dBm in the antenna 1, the radio tag reader monitors the baseband signal I on the line between the low-frequency amplifier 13 and the analog-to-digital converter 14 in the baseband unit 24, and also considers the baseband signal I as the frequency component by applying fast Fourier transform (FFT) to the baseband signal I.
   In other words, in the waveform of the baseband signal I, it is confirmed that there is a spectrum of 400 kHz equivalent to the frequency difference between the 5th channel and the 7th channels, and spectra are present at the spots apart by 400 kHz that is the modulation frequency on the both sides, respectively.
   It is enough for the LPFs 31, 33 to have characteristics which reduce sampling frequencies to be used by the analog-to-digital converters 14, 18 and pass the frequency component (40 kHz) corresponding to the communication speed (40 kbps) of the radio tag reader. The LPFs 31, 33 have characteristics, as shown in FIG. 4, to pass the frequency component of 40 kHz and also reduce the frequency component of 80 kHz twice as high as that of 40 kHz.
   In the example shown in FIG. 3, since the frequency component is hardly present in the frequency band, which is not higher than 50 kHz that is the pass bands of the LPFs 31, 33, the radio tag reader does not perform the carrier sense for the signal of the frequency of the 7th channel (953.4 MHz).
   In contrast, FIG. 5 shows the case, in which the frequency of the 7th channel (953.4 MHz) amplitude modulated by 40 kHz similarly; however, the control unit 40 monitors the baseband signal I on the line between the low-frequency amplifier 13 and the analog-to-digital converter 14 in the baseband unit 24 in the case that a signal of a level as large as -30 dBm is input to the antenna 1, and considers the baseband signal I as the frequency component by applying FFT to the baseband signal I.
   In this case, since the reception signal is amplified by the high-frequency amplifier 7 in addition to the fact that the level of the reception signal is originally large, the baseband signal I is saturated and becomes distorted. In the waveform of the baseband signal I at this moment, includes the spectra of 400 kHz and 400 ± 40 kHz similarly to the case of FIG. 3, and includes the spectra of 40 kHz and 80 kHz etc, that is the n times thereof (n is an integral number equal to or larger than two).
   Especially, since there is the spectrum of 40 kHz equal to the frequency (modulation frequency) corresponding to the communication speed, if it is assumed that the BEFs 32, 34 are not present, the carrier sense unit 36 results in performing the carrier sense.
   Therefore, the BEFs 32, 34 having the frequency characteristics shown in FIG. 6 are disposed to eliminate the frequency components of 40 kHz in the baseband signals I, Q. Thereby, erroneous carrier sense by the carrier sense unit 36 is avoided.
   Although the spectra of 80 kHz are present in the baseband signals I, Q, since the frequency components of 80 kHz are reduced by means of the LPFs 31, 33, there is no risk to pose the erroneous carrier sense.
   As mentioned above, the signal processing unit 20 is provided with the LPFs 31, 33 which passes the frequency component (40 kHz) corresponding to the communication speed (40, kbps) of the radio tag reader among the baseband signals IB, QB generated from the baseband unit 24, and demodulates the baseband signals IC, QC which have passed through the LPFs 31, 33. Further, the signal processing unit 20 includes the BEFs 32, 34 eliminating the frequency component (40 kHz) corresponding to the communication speed (40 kbps) of the radio tag reader and executes the carrier sense for the baseband signals ID, QD which have passed through the BEFs 32, 34. Thereby, even if a strong radio wave is input from other radio tag reader communicating the frequency in other channel and even if the input radio wave is amplified by the switching circuit 4, the radio tag reader may prevents the erroneous carrier sense. Thus, the radio tag reader always may surely transmit the radio wave and significantly improve its reliability.
   Using the LPFs having the characteristics to eliminate the frequency component (40 kHz) as a substitute for the foregoing band-elimination filters (BEFs) 32, 34 produces a similar effect.
   Adopting an amplifier of which the gain is variable as the high-frequency amplifier 7 in the switching circuit 4, operating the amplifier 7 in non-execution of the carrier sense, and operating the amplifier 7 in execution of the carrier sense are possible approaches. In such a case, the switchers 5, 6 of the switching circuit 4 may be omitted.
   Furthermore, in FIG. 1, the modulator 22 is provided at the position after the branch position of the output signal from the local oscillator 21 to the mixer 11, although may be the modulator 22 provides at the position before the branch position.
[2] The second embodiment of the invention will be described by referring to the drawings. FIG. 7 shows principal units of the radio tag reader to which a direct conversion system as a communication system is adopted. A circulator (directional coupler) 103 is connected to an antenna 101 for transmission and reception via a bandpass filter (BPF) 102. The BPF 102 passes a frequency component of a predetermined band for the transmission and reception among the reception signal (high-frequency signal) by the antenna 101. The reception signal which has passed through the BPF 102 is led to an amplification and non-amplification switching circuit (amplification means) 104 by the circulator 103.
   The switching circuit 104 amplifies or does not amplify the reception signal in accordance with the instruction from a signal processing unit 120, and includes switchers (SWs) 105, 106 and a high-frequency amplifier (also referred to as a low-noise amplifier [LNA]) 107. The signal processing unit 120 is provided with a switching means 120a to control the switchers 105, 106. The switching means 120a controls the switchers 105, 106 so that the reception signal input to the switching circuit 104 is amplified by the high-frequency amplifier 107 in execution of the carrier sense by a carrier sense unit 136 given below, and so that the reception signal is not amplified by the high-frequency amplifier 107 in ordinary reception in which the carrier sense is not executed. That is, the switcher 105 supplies the reception signal from the BPF 102 to either the switcher 106 or the high-frequency amplifier 107 in response to the instruction from the switching means 120a. In non-execution of the carrier sense (in ordinary reception), the switcher 105 directly supplies the reception signal to the switcher 106 without though the high-frequency amplifier 107, and in execution of the carrier sense, the switcher 105 supplies the reception signal to the switcher 106 through the high-frequency amplifier 107. The high-frequency amplifier 107 amplifies the reception signal to be supplied from the switcher 105 at a level necessary for carrier sense sensitivity of the carrier sense unit 136 mentioned below. The reception signal amplified by the high-frequency amplifier 107 is supplied to the switcher 106. The switcher 106 selectively outputs either the reception signal from the switcher 105 or the reception signal from the high-frequency amplifier 107 in response to the instruction from the switching means 120a, outputs the reception signal from the switcher 105 in the non-execution of the carrier sense, and outputs the reception signal from the high-frequency amplifier 107 in execution of the carrier sense.
   The reception signal which has passed though the switching circuit 104 is supplied to a frequency converter (conversion means) 110. The conversion unit 110 converts the reception signal to be supplied from the switching circuit 104 into a baseband signal on the basis of a high-frequency signal to be supplied from a modulator 122 mentioned later, and includes mixers 111, 115 and a 90 degree phase shifter 119. The baseband signal output from the frequency converter 110 is supplied to a baseband unit 124. The baseband unit 124 includes low-pass filters (LPFs) 112, 116, low-frequency amplifiers 113, 117 and analog-to-digital converters 114, 118.
   The mixer 111 mixes the reception signal from the switching circuit 104 with the output from the modulator 122 given below to generate a baseband signal IA having the same phase component (I component). After passing the LPF 112 and being amplified by the low-frequency amplifier 113, the baseband signal I is digital-converted by the analog-to-digital converter 114 to be supplied to the signal processing unit 120.
   The phase sifter 119 outputs a signal in which the phase of the high-frequency signal to be supplied from the modulator 122 mentioned below is shifted at 90 degrees.
   The mixer 115 mixes the reception signal from the switching circuit 104 with the high-frequency signal to be supplied from the phase shifter 119 to generate a baseband signal QA of the quadrature component. After passing through the LPF 116 and being amplified by the low-frequency amplifier 117, the baseband signal Q is digitized by the analog-to-digital converter 118 to be supplied to the signal processing unit 120.
   A local oscillator 121 is operated in accordance with the instruction from the signal processing unit 120, and generates a high-frequency signal (e.g., 953 MHz) of almost the same frequency as that of the reception signal from the radio tag. The high-frequency signal is supplied to the modulator 122. The modulator 122 outputs a high-frequency signal functioning as a power supply for operation of the radio tag while including transmission data to the radio tag, or outputs a high-frequency signal functioning only as the power supply for operation of the radio tag by modulating (ASK-modulating) the high-frequency signal generated from the local oscillator 121 in response to the modulation signal to be supplied from a digital-to-analog converter 125 given below. The high-frequency signal output from the modulator 122 is supplied to the mixer 111, the 90-degree phase shifter 119 and a power amplifier 123. The power amplifier 123 power-amplifies the high-frequency signal. The amplified high-frequency signal is lead to the side of the BPF 102 by the circulator 103, and passes the BPF 102 to be transmitted from the antenna 101.
   The signal processing unit 120 includes, as shown in FIG. 8, a low-pass filter (LPF: second filter) 131 to which a baseband signal IB digitized by the baseband unit 124 is supplied; a band-elimination filter (BEF: a first filter) 132 by which a baseband signal IC passed through the LPF 131 is supplied; a LPF (a second filter) 133 to which a baseband signal QB digitized by the baseband unit 124 is supplied; a BEF (a first filter) 134 to which a baseband signal QC passed through the LPF 133 is supplied; a data demodulator (a demodulation means) 135 to which baseband signals IC, QC passed through the LPFs 131, 133 are supplied; a carrier sense unit (a carrier sense means) 136 to which baseband signals ID, QD passed through the BEFs 132, 134 are supplied; a control unit 140 to which the demodulation result from the data demodulator 135 and the carrier sense result from the carrier sense unit 136; and a modulation control unit (modulation control means) 150 connected to the control unit 140. The BEFs 132, 134 are exclusive filters in executing the carrier sense.
   The LPFs 131, 133 pass frequency components (e.g., 40 kHz) corresponding to the communication speed (e.g., 40 kbps) of the radio tag reader, respectively, among the baseband signals IB, QB generated from the baseband unit 124.
   The BEFs 132, 134 eliminate the frequency components corresponding to the communication speed of the radio tag reader, respectively, among the baseband signals IC, QC.
   The data demodulation unit 135 demodulates the baseband signals IC, QC which have passed through the LPFs 131, 133.
   Before the radio tag reader transmits the radio waves, the carrier sense unit 136 detects the presence or absence of the same frequency component as that of the transmission frequency (e.g., 953 MHz) from the baseband signals passed through the BEFs 132, 134, and executes the carrier sense permitting the transmission from the radio tag reader if the presence of the frequency component has not been detected.
   The modulation control unit 150 generates modulation signals with a plurality of predetermined frequencies for carrier sense, selects to output each modulation signal one by one in turn in execution of the carrier sense by the carrier sense unit 136, and generates to output the modulation signals corresponding to the transmission data in data-transmission to the radio tag. The control unit 150 includes, as shown in FIG. 9, a modulation signal M1 generation unit in execution of carrier sense 151a, a modulation signal M2 generation unit in execution of carrier sense 151b, a modulation signal Md generation unit in transmission 152; and a selection unit 153.
   The signal M1 generation unit 151a generates to output a modulation signal M1 in a rectangular shape with a frequency f1. The signal M2 generation unit 151b generates to output a modulation signal M2 in a rectangular shape with a frequency f2 (> f1). The frequencies f1, f2 are frequencies present above and below on both sides of the elimination frequencies of the BEFs 132, 134, the frequency f1 is lower than the elimination frequency and the frequency f2 is higher than the elimination frequency. The signal Md generation unit 152 generates and outputs a modulation signal Md corresponding to the transmission data to be supplied from the control unit 140. The selection unit 153 selects any one of the modulation signals M1, M2, Md in response to the selection signal to be supplied from the control unit 140 to output it as a modulation signal TXD. That is, the modulation control unit 150 selects any one of a plurality of preset frequencies as the modulation frequency of the modulator 122. The modulation signal TXD having the selected modulation frequency is input to the modulator 122 via the digital-to-analog converter 125. The inputting changes the modulation frequencies of the modulator 122 into a plurality of values in turn especially in executing the carrier sense.
   The control unit 140 is provided with the means (11)-(14)as principal functions as follows:
   (11) A means for instructing an execution of the carrier sense for a fixed time to the carrier sense unit 136 before the data transmission to the radio tag
   (12) A means for allowing or inhibiting the data transmission to the radio tag in accordance with the result for the carrier sense by the carrier sense unit 136
   (13) A means for supplying the transmission data to the modulation control unit 150 if the data transmission is allowed
   (14) A means for recognizing demodulated data of the data demodulator in receiving from the radio tag (in non-execution of carrier sense).
   The following will describe the operations of the control unit 140.
   The high-frequency signal to be received by the antenna 101 is input to the amplification and non-amplification switching circuit 104 through the BPF 102 and the circulator 103. At this moment, if the reception of the radio tag is in the non-execution of the carrier sense (in ordinary reception), the reception signal input to the switching circuit 104 is not amplified and supplied to the frequency conversion unit 110. If the reception of the radio tag is in the execution of the carrier sense, the reception signal input to the switching circuit 104 is amplified by the high-frequency amplifier 107 in order to obtain the necessary carrier sense sensitivity and supplied to the frequency conversion unit 110.
   The reception signal supplied to the frequency conversion unit 110 is converted to the baseband signals IA, QA on the basis of the high-frequency signal from the modulator 122. The baseband signals IA, QA are converted into the digital signals by means of the baseband unit 124. The digital signals are input to the data demodulator 135 through the LPFs 131, 133 and also input to the carrier sense unit 136 through the LPFs 131, 133 and the BEFs 132, 134.
   The carrier sense unit 136 executes the carrier sense before the radio tag reader transmits a radio wave. For instance, if the radio tag reader intends to start the transmission of the radio wave through the frequency of 5th channel (953 MHz) among the frequency band for the radio tag to be allocated to Japan, the same frequency components as those of the transmission frequency are detected from the baseband signals ID, QD passing through the LPFs 131, 133 and the BEFs 132, 134. If the amplitude values (RSSI values) of the baseband signals ID, QD are lower than the set value, it is determined that the same frequency component (carrier) as that of the transmission frequency is not present. In this case, the transmission from the radio tag reader is allowed. However, if the amplitude values of the baseband signals ID, QD are not lower than the set value, it is determined that the same frequency component (carrier) as that of the transmission frequency. In this case, the transmission is inhibited.
   In executing the carrier sense, the modulation control unit 150 alternately switches and outputs the modulation signal M1 of the frequency f1 and the modulation signal M2 of the frequency f2 as shown in FIG. 10 for each predetermined time period (e.g., 250 *µ*s). With the switching and outputting of the modulation signals M1, M2, as shown in FIG. 11, the frequencies of the baseband signals I, Q on the line between the low-frequency amplifiers 113, 117 and the analog-to-digital converters 114, 118 in the baseband unit 124 are alternately switched to the frequencies f1, f2, respectively, for each predetermined time period.
   Hereinafter, the operations of the BPFs 132, 134 will be described. For instance, among the frequency band for UHF band radio tag allocated to Japan, if the radio tag reader intends to start transmission at the frequency of the 5th channel (953 MHz), the radio tag reader performs the carrier sense for the same 5th channel before starting the transmission. As the result of the carrier sense, if the carrier has not been detected, the transmission will be started.
   If a strong radio wave from a radio tag reader which has been transmitting in the channel other than the 5th channel is input to the radio tag reader, since the reception signal at the baseband unit 124 is saturated to be distorted, a spectrum appears at 40 kHz equal to the frequency component (modulation frequency) corresponding to the communication speed of the radio tag reader. Since this spectrum is included in the baseband (e.g., 0-100 kHz) for executing the carrier sense, the carrier sense is apt to be performed erroneously.
   Therefore, the LPFs 131, 133 for passing the frequency component (40 kHz) corresponding to the communication speed (40 kbps) among the baseband signals I, Q converted by the baseband unit 124 are disposed, and the baseband signals IC, QC which have passed through the LPFs 131, 133 are demodulated. Further, the band-elimination filters (BEFs) 132, 134 for eliminating the frequency component (40 kHz) corresponding to the communication speed (40 kHz) among the baseband signals IC, QC which have passed through the LPFs 131, 133 are disposed, and the band signals ID, QD which have passed thorough the BEFs 132. 134 are brought into the carrier sense. Thereby, even when the strong radio wave is input from another radio tag reader communicating through the frequency in other channel, and the input radio wave is amplified by the switching circuit 104, the erroneous carrier sense may be prevented.
   However, according to the Japan Wireless Telegraphy Act, in the carrier sense, it is regulated to satisfy the carrier sense sensitivity (e.g., -74 dBm) in a channel band for communication. Since the channel band allocated for the radio tag in the UHF band is 200 kHz, in the case of the 5th channel, it is needed to maintain the carrier sense sensitivity within the range of 953 MHz ± 100 kHz.
   As for a concrete example, in the case in which the communication speed between the concerned radio tag reader and the radio tag is set to 40 kbps, cut-off frequencies of the LPFs 131, 133 in the signal processing unit 120 are set to around 100 kHz, the elimination frequencies of the BEFs 132. 134 are set to 40 kHz, the modulation frequency in executing the carrier sense for the high-frequency signal from the local oscillator 121 is set to 40 kHz. Further, if a signal with -74 dBm that is the standardized value of the carrier sense is input to the antenna 101, the relationship among the amplitude values (RSSI values) of the baseband signals ID, QD and the frequencies are expressed as shown in FIG. 12. That is, it becomes clear that the minimum value of the amplitude value is '57' at 953 MHz, the maximum value of the amplitude value is '102' at 953.02 MHz, and the amplitude value varies between the maximum and minimum values (variation width is expressed by 102-57=45).
   Especially, since the elimination frequency of the BEFs 132, 134 is 40 kHz, the amplitude value at 953 MHz becomes small.
   In other words, if the modulation frequency input to the modulator 122 is 40 kHz, the high-frequency signal of 953 MHz to be generated from the local oscillator 121 is modulated by 40 kHz. When the high-frequency signal of 953 MHz is received by the antenna 101, the reception signal and the high-frequency signal of 953 MHz modulated by 40 kHz are mixed by the mixers 111, 115, thereby, the baseband signals I, Q of 40 kHz are obtained. However, since the baseband signals I, Q of 40 kHz are reduced by the BEFs 132. 134, the amplitude values of the baseband signals ID, QD to be supplied to the carrier sense unit 136 become very small. Because of such a reason, the amplitude value at 953 MHz becomes small.
   It is desirable for the amplitude values of the baseband signals ID, QD are to be ideally constant in the channel band. The reason why the amplitude values thereof are desirable to be constant is that the carrier sense sensitivity becomes constant for each frequency in the channel band, if the amplitude values are constant in the channel band. Varying the amplitude values in the channel band poses the frustrations of the carrier sense sensitivity similarly. In such a case, there is some possibility that the carrier sense is unnecessarily performed for the reception signal with a low level or a noise.
   To prevent such unnecessary carrier sense, in this embodiment, in executing the carrier sense, the modulation control unit 150 alternately switches to output the modulation signals M1 and M2 for each predetermined time (e.g., 250 *µ* s), thereby, the baseband signals I, Q of which the frequency are alternately switched for each predetermined time between f1 and f2 if the reception signal input from the antenna 101 is 953 MHz.
   The carrier sense unit 136 takes an average of the amplitude values of the baseband signals ID, QD over the time period of the even multiples of a predetermined time (e.g., 250 *µ* s) of the foregoing switching, and implements the carrier sense for the averaged amplitude value. Thereby, the amplitude value which is small in fluctuation in time may be obtained, and the carrier sense without being affected by an instantaneous noise and with high reliability may be achieved. For instance, if the predetermined time for switching is set to 250 *µ* s, it is preferable for an averaged time period to be set to 500 *µ* s twice as long as the predetermined time or 1 ms four times as long as the predetermined time.
   FIG. 13 shows the case in which the amplitude values of the baseband signals ID, QD in the case that the modulation frequency is a single frequency f1 (=11.7 kHz), the amplitude values of the baseband signals ID, QD in the case that the modulation frequency is a single frequency f2 (=90.9 kHz), and the amplitude values of the baseband signals ID. QD in the case that the modulation frequencies are alternately switched between f1 and f2 for each predetermined time are confirmed by experiment, respectively.
   Although the variation width of the amplitude value in the case that the modulation frequency is the single frequency f1, and the variation width of the amplitude value in the case that the modulation frequency is the single frequency f2 become larger than the variation value of the amplitude value in the case that the modulation frequency is the single one of 40 kHz shown in FIG. 12, the variation width of the amplitude value in the case that the frequencies f1 and f2 are alternately switched for each predetermined time has the range of '23' from the minimum value '67' at 953.09 MHz up to the maximum value '90' at 953.04 MHz. The variation width in the case of the foregoing alternative switching of the modulation frequencies is improved about a half in the case of the single modulation frequency of 40 kHz.
   Like this, disposing the BEFs 32, 34 for the carrier sense, further alternately switching the modulation frequencies in execution of the carrier sense into f1 and f2 for each predetermined time enables to perform the carrier sense without error and with stability even if the strong radio wave is input from other radio tag reader communicating through the frequency of other channel, and also enables to secure the stable carrier sense sensitivity in the channel band of the communication by the concerned radio tag reader.
[3] The third embodiment will be described hereinafter.
   The modulation control unit 150, as shown in FIG. 14, includes a modulation signal M1 generation unit in executing carrier sense 151a; a modulation signal M2 generation unit in executing carrier sense 151b; a modulation signal M3 generation unit in executing carrier sense 151c; a modulation signal Md generation unit in transmission 152 and a selection unit 153.
   The modulation signals M1, M2 generation units 151a, 151b generate to output rectangular-wave shaped modulation signals M1, M2 respectively having frequencies f1, f2 in the same way as that of the second embodiment. The modulation signal M3 generation unit 151c generates to output a rectangular-wave shaped modulation signal M3 of a frequency f3.
   The relationship among the frequencies f1, f2, f3 is represented by an expression 'f1<f3<f2'. For instance, 11.7 kHz which is lower than the elimination frequency 40 kHz of the BEFs 132, 134 is selected as the frequency f1, for instance, 90.9 kHz which is higher than the elimination frequency 40 kHz of the BEFs 32, 34 is selected as the frequency f2, and the same value as the elimination frequency 40 kHz of the band-elimination filters 32, 34 is selected as the frequency f3.
   The selection unit 153 selects any one of the modulation signals M1, M2, M3, Md in response to the selection signal supplied from the control unit 140, and outputs the selected signal as a modulation signal TXD.
   The following will describe the operations of the third embodiment.
   In executing the carrier sense, the modulation control unit 150 switches to output the modulation signal M1 of the frequency f1, the modulation signal M2 of the frequency f2 and the modulation signal M3 of the frequency f3 in turn for each predetermined time period (e.g., 250 *µ*s). With this switching to output the modulation signals M1, M2, M3, the frequencies of the baseband signals I, Q are switched in turn to the frequencies f1, f2, f3 for each predetermined time period if the reception signal input from the antenna 1 is 953 MHz.
   FIG. 15 shows the case in which the amplitude values of the baseband signals ID, QD in the case that the modulation frequency is a single frequency f1 (=11.7 kHz), the amplitude values of the baseband signals ID, QD in the case that the modulation frequency is a single frequency f2 (=90.9 kHz), and the amplitude values of the baseband signals ID, QD in the case that the modulation frequency is a single frequency f3 (=40 kHz), and amplitude values of the baseband signals ID, QD in the case that the modulation frequencies are switched in turn to the frequencies f1, f2, f3 are each confirmed by experiments.
   Although the variation width of the amplitude value in the case that the modulation frequency is the single frequency 40 kHz, and the variation width of the amplitude value in the case that the modulation frequency is the single frequency f1 or f2 becomes larger than the variation value of the amplitude value in the case that the modulation frequency is the single frequency of 40 kHz, the variation width of the amplitude value in the case that the frequencies f1, f2, f3 are alternately switched for each predetermined time period has the range of '16' from the minimum value '74' at 953.08 MHz up to the maximum value '90' at 953.04 MHz. The variation width in the case of alternative switching of the modulation frequencies is improved about 1/3 in the case of the single modulation frequency of 40 kHz, and 70% in the case of two-frequency switching between the frequencies f1, f2.
   The configuration, operation and effect other than this are similar to the second embodiment. Therefore, the description thereof will be omitted.
[4] The fourth embodiment of the invention will be described hereinafter.
   The modulation control unit 150, as shown in FIG. 16, includes a modulation signal M1 generation unit in executing carrier sense 151a; a modulation signal M2 generation unit in executing carrier sense 151b; a modulation signal Md generation unit in transmission 152; a selection unit 153 and an overlapping unit 154.
   The modulation signals M1, M2 generation units 151a, 151b generate to output rectangular-wave shaped modulation signals M1, M2 of respectively having the frequencies f1, f2, in a manner similar to the second embodiment. For instance, 11.7 kHz which is lower than a elimination frequency 40 kHz of the BEFs 132, 134 is selected as the frequency f1, and for instance, 90.9 kHz which is higher than the elimination frequency 40 kHz of the BEFs 132, 134 is selected as the frequency f2.
   The overlapping unit 154 overlaps the modulation signals M1, M2 and outputs a modulation signal changing in level at two frequencies f1, f2. The modulation signal is supplied to the selection unit 153.
   The selection unit 153 selects either the modulation signal to be supplied from the overlapping unit 154 or the modulation signal Md to be supplied from the modulation signal Md generation unit 152 in response to the selection signal to be supplied from the control unit 140, and outputs the selected signal as a modulation signal TXD.
   The operation of the fourth embodiment will be described hereinafter.
   In executing the carrier sense, the modulation signal changing in level by two frequencies f1, f2 is supplied to a modulator 122 to be amplitude modulated. The supplying may reduce the variation widths of the amplitude values of the baseband signals ID, QD in the channel band. Thereby, stable carrier sense sensitivity may be secured in a channel band.
   The configuration, operations and effect other than this are the same as those of the second embodiment. Therefore, the description about them will be omitted.
[5] Modified Example of the Second, Third and Fourth Embodiments
   While the second, third and fourth embodiments have been described ASK modulation or an AM modulation as the modulation system of the modulator 122 by way of example, the invention is not limited to the ASK modulation and the AM modulation, and for example, a BPSK modulation may be adopted. As substitute for the band-elimination filters (BEF) 132, 134, the same effect may be produced by using a low-pass filter having a characteristic for eliminating the frequency component (40 kHz). Further, an amplifier capable of changing a gain may be used as the high-frequency amplifier 107 in the amplification and non-amplification switching circuit 104, and may operate the high-frequency amplifier 107 with a low gain in non-execution of the carrier sense, and may operate the high-frequency amplifier 107 with a high gain in execution of the carrier sense. In this case, the switchers 105, 106 of the switching circuit 104 may be omitted.
   While the signals to be generated from the modulation signal generation units 151a, 151b, 151c have been described as the signals with rectangular waves, the invention is not limited to the case of the signals with the rectangular waves; waves of which the bands are restricted by the low-pass filters may be usable.
   It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A radio tag reader comprising:
carrier sense means (36, 136) for executing carrier sense which senses a reception.signal having the same frequency as a frequency to be transmitted for a fixed time before transmitting the frequency for confirming that another tag read does not communicate through the frequency;
amplification means (4, 104) for amplifying the reception signal so that the reception signal during execution of the carrier sense is larger than that during nonexecution of the carrier sense; and
conversion means (10, 110) for converting the reception signal which has passed through the amplification means (4, 104) into a baseband signal and for supplying the converted reception signal to the carrier sense means (36, 136) as an object to be sensed, **characterized in that** the radio tag reader further comprises:
first filters (32, 34, 132, 134) for eliminating frequency components corresponding to a communication speed of the radio tag reader in the baseband signal converted by the conversion means (10, 110), wherein
the carrier sense means (36, 136) detects presence or absence of the same frequency components as those of a transmission frequency in the baseband signals which have passed through the first filters (32, 34, 132, 134) before the radio tag reader transmits the transmission frequency and executes carrier sense for allowing the radio tag reader to make transmission if the same frequency components are absent.

2. The radio tag reader according to claim 1, **characterized by** further comprising;
second filters (31, 33, 131, 133) which are disposed in front of stages of the first filters (32, 34, 132, 134) and pass frequency components corresponding to a communication speed of the radio tag reader in the baseband signal converted by the conversion means (10, 110); and
demodulator means (35, 135) for demodulating baseband signals which have passed through the second filters (31, 33, 131, 133) and have not passed through the first filters (32, 34, 132, 134).

3. The radio tag reader according to claim 1 or 2, **characterized by** further comprising:
an oscillator (121) which generates a highfrequency signal;
modulation means (122) for modulating the highfrequency signal to be generated from the oscillator (121); and
modulation control means (150) for selecting any one of a plurality of predetermined frequencies as a modulation frequency of the modulation means (122) in executing the carrier sense by the carrier sense means (136).

4. The radio tag reader according to claim 1 or 2, **characterized by** further comprising;
an oscillator (121) which generates a highfrequency signal;
modulation means (122) for modulating the highfrequency signal to be generated from the oscillator (121) in response to a modulation signal to be input; and
modulation control means (150) which generates to overlap modulation signals of a plurality of predetermined frequencies and inputs the overlapped modulation signals to the modulation means (122) in executing the carrier sense by the carrier sense means (136).

5. The radio tag reader according to any one of claims 1-4, **characterized in that**
the plurality of predetermined frequencies are two frequencies which are present above and under a elimination frequency of the first filters (32, 34, 132, 134).

6. The radio tag reader according to any one of claims 1-4, **characterized in that**
the plurality of predetermined frequencies are three frequencies, in all, which are the elimination frequency and two frequencies which is present above and under the elimination frequencies of the first filters (32, 34, 132, 134).

7. The radio tag reader according to any one of claims 1-6, **characterized in that**
the amplification means (4, 104) amplifies or does not amplify the reception signal.

8. The radio tag reader according to claim 7, **characterized by** further comprising:
switching means (20a, 120a) for switching between amplification and non-amplification of the amplification means (4, 104) in execution and non-execution of the carrier sense by the carrier sense means (36, 136).

9. The radio tag reader according to any one of claims 1-6, **characterized in that**
the first filters (32, 34, 132, 134) are band-elimination filters.

## Patentansprüche

1. Funketikettenleser, aufweisend:
Trägererfassungsmittel (36, 136) zum Ausführen einer Trägererfassung, die ein Empfangssignal erfasst, das die gleiche Frequenz wie eine zu übermittelnde Frequenz besitzt, für eine bestimmte Zeit vor einem Übermitteln der Frequenz zum Bestätigen, dass ein anderer Etikettenleser nicht über die Frequenz kommuniziert;
Verstärkungsmittel (4, 104) zum Verstärken des Empfangssignals, so dass das Empfangssignal während eines Ausführens der Trägererfassung größer ist als das während des Nicht-Ausführens der Trägererfassung; und
Umwandlungsmittel (10, 110) zum Umwandeln des Empfangssignals, das durch das Verstärkungsmittel (4, 104) gelangt ist, in ein Basisbandsignal und zum Zuführen des umgewandelten Empfangsignals zum Trägererfassungsmittel (36, 136) als ein zu erfassendes Objekt, **dadurch gekennzeichnet, dass** der Funketikettenleser ferner aufweist:
erste Filter (32, 34, 132, 134) zum Beseitigen von Frequenzkomponenten entsprechend einer Übertragungsgeschwindigkeit des Funketikettenlesers im Basisbandsignal, das vom Umwandlungsmittel (10, 110) umgewandelt ist, wobei
das Trägererfassungsmittel (36, 136) ein Vorhandensein oder ein Fehlen der gleichen Frequenzkomponenten wie die einer Sendefrequenz in den Basisbandsignalen, die durch die ersten Filter (32, 34, 132, 134) gelangt sind, erkennt, bevor der Funketikettenleser die Sendefrequenz übermittelt und eine Trägererfassung durchführt, zum Ermöglichen, dass der Funketikettenleser eine Übertragung durchführt, wenn die gleichen Frequenzkomponenten fehlen.

2. Funketikettenleser gemäß Anspruch 1, **dadurch gekennzeichnet, dass** er weiter enthält:
zweite Filter (31, 33, 131, 133), die vor Stufen der ersten Filter (32, 34, 132, 134) angeordnet sind und Frequenzkomponenten, die einer Kommunikationsgeschwindigkeit des Funketikettenlesers im Basisbandsignal, umgewandelt vom Umwandlungsmittel (10, 110), entsprechen, weiterleiten; und
ein Demodulationsmittel (35, 135) zum Demodulieren von Basisbandsignalen, die durch die zweiten Filter (31, 33, 131, 133) gelangt sind und nicht durch die ersten Filter (32, 34, 132, 134) gelangt sind.

3. Funketikettenleser gemäß Anspruch 1 oder 2, **dadurch gekennzeichnet, dass** er weiter enthält:
einen Oszillator (121), der ein Hochfrequenzsignal erzeugt;
ein Modulationsmittel (122) zum Modulieren des vom Oszillator (21) zu erzeugenden Hochfrequenzsignals; und
ein Modulationssteuerungsmittel (150) zum Auswählen einer Frequenz aus einer Vielzahl von vorbestimmten Frequenzen als eine Modulationsfrequenz des Modulationsmittels (122) beim Ausführen der Trägererfassung durch das Trägererfassungsmittel (136).

4. Funketikettenleser gemäß Anspruch 1 oder 2, **dadurch gekennzeichnet, dass** er weiter enthält:
einen Oszillator (121), der ein Hochfrequenzsignal erzeugt;
ein Modulationsmittel (122) zum Modulieren des vom Oszillator (121) als Reaktion auf ein einzubringendes Modulationssignal zu erzeugenden Hochfrequenzsignals; und
ein Modulationssteuerungsmittel (150), das Modulationssignale zum Überlappen einer Vielzahl von vorbestimmten Frequenzen generiert und die überlappenden Modulationssignale zum Modulationsmittel (122) beim Ausführen der Trägererfassung durch das Trägererfassungsmittel (136) zuführt.

5. Funketikettenleser gemäß einem der Ansprüche 1 bis 4, **dadurch gekennzeichnet, dass**
die Mehrzahl von vorbestimmten Frequenzen zwei Frequenzen sind, die über und unter einer Sperrfrequenz der ersten Filter (32, 34, 132, 134) vorhanden sind.

6. Funketikettenleser gemäß einem der Ansprüche 1 bis 4, **dadurch gekennzeichnet, dass**
die Mehrzahl von vorbestimmten Frequenzen insgesamt drei Frequenzen sind, die die Sperrfrequenz und zwei Frequenzen sind, die über und unter den Sperrfrequenzen der ersten Filter (32, 34, 132, 134) vorhanden sind.

7. Funketikettenleser gemäß einem der Ansprüche 1 bis 6, **dadurch gekennzeichnet, dass** das Verstärkungsmittel (4, 104) das Empfangssignal verstärkt oder nicht verstärkt.

8. Funketikettenleser gemäß Anspruch 7, **dadurch gekennzeichnet, dass** er weiter enthält:
ein Schaltmittel (20a, 120a) zum Schalten zwischen Verstärkung und Nichtverstärkung des Verstärkungsmittels (4, 104) beim Ausführen und Nicht-Ausführen der Trägererfassung durch das Trägererfassungsmittel (36, 136).

9. Funketikettenleser gemäß einem der Ansprüche 1 bis 6, **dadurch gekennzeichnet, dass** die ersten Filter (32, 34, 132, 134) Sperrfilter sind.

## Revendications

1. Lecteur d'étiquettes radio comportant :
un moyen de détection de porteuse (36, 136) pour exécuter une détection de porteuse qui détecte un signal de réception possédant la même fréquence qu'une fréquence à transmettre pendant un temps fixé avant de transmettre la fréquence pour confirmer qu'un autre lecteur d'étiquettes ne communique pas par l'intermédiaire de la fréquence ;
un moyen d'amplification (4, 104) pour amplifier le signal de réception de sorte que le signal de réception pendant l'exécution de la détection de porteuse est plus grand que pendant la non-exécution de la détection de porteuse ; et
un moyen de conversion (10, 110) pour convertir le signal de réception qui a traversé le moyen d'amplification (4, 104) en un signal de bande de base et pour délivrer le signal de réception converti au moyen de détection de porteuse (36, 136) en tant qu'objet à détecter, **caractérisé en ce que** le lecteur d'étiquettes radio comporte en outre :
des premiers filtres (32, 34, 132, 134) pour éliminer des composantes de fréquence correspondant à une vitesse de communication du lecteur d'étiquettes radio dans le signal de bande de base converti par le moyen de conversion (10, 110), dans lequel
le moyen de détection de porteuse (36, 136) détecte la présence ou l'absence des mêmes composantes de fréquence que celles d'une fréquence de transmission dans les signaux de bande de base qui ont traversé les premiers filtres (32, 34, 132, 134) avant que le lecteur d'étiquettes radio transmettre la fréquence de transmission et exécute la détection de porteuse pour permettre au lecteur d'étiquettes radio d'effectuer une transmission si les mêmes composantes de fréquence sont absentes.

2. Lecteur d'étiquettes radio selon la revendication 1, **caractérisé en ce qu'**il comporte en outre :
des seconds filtres (31, 33, 131, 133) qui sont disposés devant les étages des premiers filtres (32, 34, 132, 134) et traversent des composantes de fréquence correspondant à une vitesse de communication du lecteur d'étiquettes radio dans le signal de bande de base converti par le moyen de conversion (10, 110) ; et
un moyen de démodulation (35, 135) pour démoduler des signaux de bande de base qui ont traversé les seconds filtres (31, 33, 131, 133) et n'ont pas traversé les premiers filtres (32, 34, 132, 134).

3. Lecteur d'étiquettes radio selon la revendication 1 ou 2, **caractérisé en ce qu'**il comporte en outre :
un oscillateur (121) qui génère un signal haute fréquence ;
un moyen de modulation (122) pour moduler le signal haute fréquence à générer à partir de l'oscillateur (121) ; et
un moyen de contrôle de modulation (150) pour sélectionner l'une quelconque d'une pluralité de fréquences prédéterminées en tant que fréquence de modulation du moyen de modulation (122) lors de l'exécution de la détection de porteuse par le moyen de détection de porteuse (136).

4. Lecteur d'étiquettes radio selon la revendication 1 ou 2, **caractérisé en ce qu'**il comporte en outre :
un oscillateur (121) qui génère un signal haute fréquence ;
un moyen de modulation (122) pour moduler le signal haute fréquence à générer à partir de l'oscillateur (121) en réponse à un signal de modulation à entrer ; et
un moyen de contrôle de modulation (150) qui génère des signaux de modulation pouvant se chevaucher d'une pluralité de fréquences prédéterminées et entre les signaux de modulation chevauchés dans le moyen de modulation (122) lors de l'exécution de la détection de porteuse par le moyen de détection de porteuse (136).

5. Lecteur étiquette radio selon l'une quelconque des revendications 1-4, **caractérisé en ce que**
la pluralité de fréquences prédéterminées sont de fréquences qui sont présentes au-dessus et au-dessous d'une fréquence d'élimination des premiers filtres (32, 34, 132, 134).

6. Lecteur d'étiquettes radio selon l'une quelconque des revendications 1-4, **caractérisé en ce que**
la pluralité des fréquences prédéterminées sont trois fréquences, en tout, qui sont la fréquence d'élimination et deux fréquences qui sont présentes au-dessous ou au-dessus des fréquences d'élimination des premiers filtres (32, 34, 132, 134).

7. Lecteur d'étiquettes radio selon l'une quelconque des revendications 1-6, **caractérisé en ce que**
le moyen d'amplification (4, 104) amplifie ou n'amplifie pas le signal de réception.

8. Lecteur d'étiquettes radio selon la revendication 7, **caractérisé en ce qu'**il comporte en outre :
un moyen de commutation (20a, 120a) pour commuter entre une amplification et une non-amplification du moyen d'amplification (4, 104) lors de l'exécution et de la non-exécution de la détection de porteuse par le moyen de détection de porteuse (36, 136).

9. Lecteur d'étiquettes radio selon l'une quelconque des revendications 1-6, **caractérisé en ce que**
les premiers filtres (32, 34, 132, 134) sont des filtres éliminateurs de bande.
